# FASCICULE DE BREVET EUROPEEN

(11) **EP 0 718 729 B1**
(45) Date de publication et mention de la délivrance du brevet: **18.07.2001**
(21) Numéro de dépôt: 95440087.5
(22) Date de dépôt: 21.12.1995
(51) Int. Cl.: G05B 19/042

(54) **Dispositif de commande de charges actives électriques, telles que de volets roulants motorisés, d'éclairages ou analogues**
Steuergerät für aktive elektrische Lasten, wie Rolläden, Beleuchtung oder dergleichen
Controller for active electrical loads, such as roller blinds, lighting or similar

(30) Priorité: 23.12.1994 FR 9415734; 24.02.1995 FR 9502338
(43) Date de publication de la demande: 26.06.1996
(73) Titulaire: BUBENDORFF Société Anonyme, 68300 Saint-Louis (FR)
(72) Inventeur: Bubendorff, Eric, 68510 Uffheim (FR)
(74) Mandataire: Rhein, Alain

(56) Documents cités:
- EP-A- 0 320 390
- WO-A-89/04578
- WO-A-93/02498
- US-A- 5 189 412

## Description

L'invention concerne un dispositif de commande de charges actives électriques telles que de volets roulants motorisés d'éclairage ou analogues, lesdites charges étant raccordées les unes aux autres à l'aide d'une interface domotique appropriée, tandis qu'à chacune d'elle est associé un commutateur autorisant leur liaison à une alimentation en énergie électrique, à chacune de ces charges étant associés, en outre, des moyens de commande à même de transmettre à ces charges, par l'intermédiaire du commutateur et en dehors des ordres de fonctionnement marche-arrêt, au moins un ordre supplémentaire, tel qu'une programmation d'un fonctionnement différé ou d'un cycle de fonctionnement déterminé ou encore, la commande de fonctionnement d'au moins une autre charge associée.

La présente invention concerne le domaine de la gestion du fonctionnement de charges électriques, tout particulièrement dans le cadre d'une configuration domotique.

Les évolutions récentes dans le domaine de l'électronique, telles que la miniaturisation et, surtout, la réduction des coûts de revient des composants électroniques, a permis de mettre sur le marché des appareillages électriques dont la commande de fonctionnement est de plus en plus sophistiquée de manière à pouvoir répondre très exactement aux besoins précis d'un utilisateur.

Cette gestion des appareillages électriques qui est, en somme, la base des systèmes domotiques, permet, communément, de commander le fonctionnement différé de ces appareillages électriques ou encore de programmer un cycle de fonctionnement donné parmi plusieurs possibilités. Il est encore commun de disposer de moyens de commande qui, au lieu de se contenter de gérer le fonctionnement d'un seul appareillage électrique, sont en mesure d'agir, simultanément, sur plusieurs d'entre eux définissant un groupe et qui peuvent être de nature identique ou non.

A titre d'exemple, il et connu de gérer le fonctionnement simultanément, de plusieurs systèmes de fermeture d'une habitation, tels que des volets roulants ou autres moyens d'occultation, portails motorisés et mécanismes de verrouillage, ceci par l'intermédiaire de moyens de commande appropriés. Or, il paraît évident, avant de quitter une habitation, de s'assurer qu'elle est convenablement fermée et, par conséquent, que l'ordre passé, correspondant à la fermeture de l'ensemble des volets roulants et autres systèmes de verrouillage, faisant partie du même groupe commandé a été convenablement exécutée. La solution simpliste, mais, bien sûr contraignante pour l'usager, consiste à faire le tour de l'habitation et à vérifier, de visu, si l'ordre qui a été transmis est ou non exécuté. Bien évidemment, la commande centralisée, ne correspond, dans ces conditions, qu'à un simple gadget d'un intérêt tout à fait discutable.

Une autre solution consiste à vérifier, au niveau de chaque système de fermeture et par l'intermédiaire d'automatismes appropriés, tels que capteurs ou autres, que l'ordre, par exemple le verrouillage, est convenablement exécuté. Cette information est alors retransmise vers les moyens de commande d'où l'ordre a été émis, puis transcrite en une signalisation visuelle et/ou sonore à même d'être interprétée par l'usager.

En fait, une telle solution, si elle répond parfaitement aux besoins de l'usager, s'avère tout particulièrement contraignante du point de vue de sa mise en oeuvre. Ainsi, dans le cadre d'un raccordement filaire, il faut, obligatoirement, prévoir une liaison filaire retour entre chaque système de fermeture et les moyens de commande. Si une telle conception est envisageable dans une construction neuve, elle représente un réel frein au développement de ces systèmes domotiques dans les constructions existantes.

A ce propos, l'électronique actuelle a, là encore, permis de répondre à ce problème dans la mesure où elle a su rendre de plus en plus accessible les systèmes de commande à distance par ondes ultrasons ou encore par infrarouges et, principalement, par ondes radio. Toutefois, en associant de tels moyens de transmission à la configuration précédemment décrite, l'on s'aperçoit qu'il est nécessaire d'équiper à la fois d'un émetteur et d'un récepteur, non seulement les moyens de commande, mais, également, chacun des systèmes de fermeture. Cela a, bien évidemment, une répercussion, non négligeable, vu le nombre des systèmes d'émission et de réception à mettre en place, sur le coût de cette gestion domotique d'un ensemble de systèmes de fermeture.

A titre d'exemple, l'on connaît par le document US-A-5.189.412 un dispositif de contrôle à distance du fonctionnement d'un plafonnier à ventilateur. Ainsi, ce dispositif comporte, tout d'abord, un boîtier de commande et de programmation à distance qui, par l'intermédiaire d'une unité de traitement associée est en mesure de gérer le fonctionnement d'un ventilateur (vitesse de rotation, sens de rotation, et heure de fonctionnement) ainsi que d'une lumière (réglage de l'intensité, l'heure d'allumage et d'extinction, durée de fonctionnement, etc...).

Dans le cadre d'un exemple de réalisation, le boîtier de commande se présente sous forme d'un émetteur à même de transmettre les ordres à une station réceptrice servant d'interface entre l'alimentation en énergie électrique et le plafonnier à ventilateur, sans compter que cette station réceptrice a pour but de gérer le fonctionnement du ventilateur et de la lumière en fonction, précisément, de l'ordre transmis.

Quoi qu'il en soit, le boîtier de commande ou émetteur comporte des moyens d'affichage à même d'informer l'usager sur l'état de programmation de l'heure et de la durée de fonctionnement du ventilateur et de la lumière, ces moyens d'affichage étant encore, aptes à donner d'autres indications, du type vitesse et sens de rotation du ventilateur ou réglage de l'intensité du plafonnier.

En réalité, l'on observe que, dans ce cas de figure, les deux charges commandées, à savoir le plafonnier et la lumière, se situent forcément à un même endroit dans une habitation, s'agissant d'un plafonnier à ventilateur. A supposer, à présent, que les moyens de commande soient placés à proximité de ces charges, il est facile, pour l'usager, d'obtenir un retour d'information par la charge elle-même quant à son état de fonctionnement.

En fait, la présente invention s'attache, notamment, à la situation où l'on est en mesure de commander, depuis un endroit bien précis dans une habitation, une première charge placée à proximité desdits moyens de commande, mais également au moins une deuxième charge qui elle, précisément, n'est pas visible depuis ces moyens de commande.

La question à laquelle la présente invention se propose par exemple d'apporter une solution se résume de la manière suivante : comment savoir depuis une pièce à l'intérieur d'une habitation d'où l'on commande, simultanément, plusieurs volets roulants répartis dans différentes pièces, que, précisément, ces autres volets roulants dans ces autres pièces et, donc, non visibles depuis l'endroit où s'effectue la commande, sont convenablement fermés ?

La solution décrite dans le document US-A-5.189.412 ne répond, absolument pas, à ce problème. Tout particulièrement, l'on observera que les moyens d'affichage n'ont pour but que de donner une indication à l'usager concernant le réglage qu'il est en train d'opérer. Ainsi, cet usager sait, par exemple, qu'il a demandé au ventilateur de tourner à une certaine vitesse et dans un sens de rotation bien déterminé, ceci est effectivement affiché à l'écran. Mais en aucun cas il est assuré qu'après transmission de l'ordre, le ventilateur tourne, effectivement, à la bonne vitesse dans le sens souhaité. En effet, il n'y a pas de retour d'informations entre le ventilateur et l'écran permettant de signaler à l'usager que l'ordre transmis est, effectivement, bien exécuté. En quelque sorte, si l'on place le transmetteur dans une pièce et le récepteur que constitue le ventilateur dans une autre pièce, l'usager n'est absolument pas certain que son ventilateur tourne au regard des informations communiquées à l'écran qui, en fin de compte, ne laissent apparaître que les paramètres de la commande qu'il a bien voulu transmettre.

La présente invention se veut à même de répondre, précisément, à ce problème, tout particulièrement lorsque l'appareillage électrique commandé correspond, tel que dénommé dans la suite de la description, à une charge active, c'est-à-dire dont le fonctionnement est perceptible visuellement et/ou de manière auditive.

A ce propos, une charge électrique peut être rendue active, dans le sens de la présente description, en lui associant, tel que cela sera exposé davantage ci-dessous, des moyens de signalisation visuels et/ou sonores.

En fait, l'objectif de la présente invention consiste à transformer au moins l'une des charges percevant un ordre au travers des moyens de commande, en tant que moyens de signalisation visuels et/ou sonores quant à la bonne exécution ou non de cet ordre. Tout particulièrement, dans le cas, par exemple, de la transmission, par l'intermédiaire desdits moyens de commande, d'un ordre correspondant à une programmation d'un fonctionnement différé d'une charge active électrique, cette charge va être en mesure d'informer l'usager que la programmation a bien été perçue et enregistrée en se mettant en fonctionnement selon un cycle bref et dépendant de l'information à transmettre, cycle de fonctionnement qui est précisément, susceptible d'être perçu visuellement et/ou de manière auditive par l'usager.

Bien entendu, il est préféré, dans une configuration de plusieurs charges actives électriques commandées, que la charge destinée à constituer, en soi, les moyens de signalisation visuels et/ou sonores destinés à transmettre une information à l'usager, soit celle qui est, effectivement, perceptible, visuellement ou par voie auditive par cet usager depuis lesdits moyens de commande.

A titre d'exemple, si les charges actives électriques sont constituées par des volets roulants, la fermeture ou non de l'un de ceux visibles depuis les moyens de commande, peut informer l'usager que les autres volets roulants du groupe commandé sont ou non fermés. Ce même volet roulant, visible depuis lesdits moyens de commande, peut également traduire, sous forme d'un mouvement précis du tablier du volet roulant, qu'il a bien perçu un ordre de programmation déterminé.

Ainsi, l'invention concerne un dispositif de commande de charges actives électriques, telles que de volets roulants motorisés, d'éclairages ou analogues, lesdites charges étant raccordées les unes aux autres, à l'aide d'une interface domotique appropriée, tandis qu'à chacune d'elles est associé un commutateur autorisant leur liaison à une alimentation en énergie électrique, à chacune de ces charges étant associés, en outre, des moyens de commande à même de transmettre à ces charges, par l'intermédiaire du commutateur et en dehors des ordres de fonctionnement marche-arrêt, au moins un ordre supplémentaire, tel qu'une programmation de fonctionnement différé ou un cycle de fonctionnement déterminé, ou encore la commande de fonctionnement d'au moins un autre charge associée, caractérisé par le fait qu'au moins une des charges aptes à être commandées par des moyens de commande donnés, constitue des moyens de signalisation visuels et/ou sonores à même d'informer l'usager sur la bonne exécution ou réception de l'un au moins des ordres à même d'être transmis par ces moyens de commande.

L'invention sera mieux comprise à la lecture de la description qui suit, accompagnée d'un dessin correspondant à un exemple de réalisation.
- la figure 1 représente un exemple d'application de la présente invention pour la commande d'éclairages ;
- la figure 2 est une vue du détail A de la figure 1 et de la figure 3 ;
- la figure 3 est une illustration de l'application du dispositif de commande, conforme à l'invention, à des volets roulants équipés, chacun, de moyens de commande.

La présente invention est relative à un dispositif de commande 1 destiné à intervenir sur le fonctionnement d'au moins un appareillage électrique, défini comme étant une charge active électrique 2 dans la présente description dès l'instant que le fonctionnement de cet appareillage est perceptible, visuellement et/ou de manière auditive par un utilisateur.

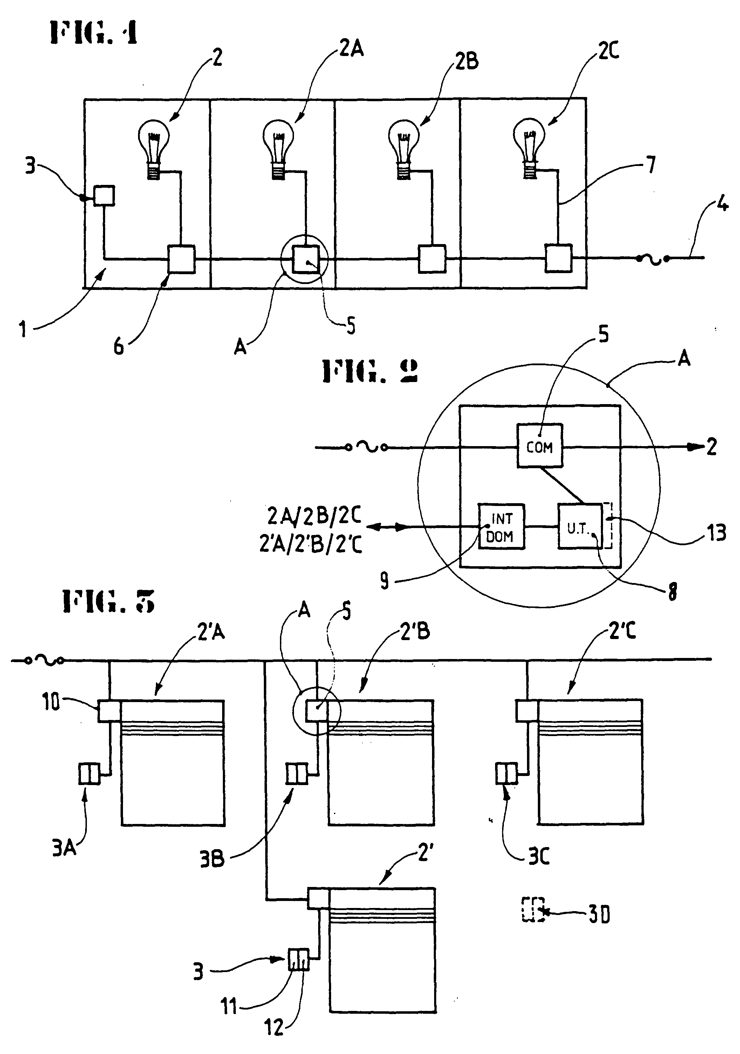

Ainsi, il est représenté, dans le cadre de la figure 1, l'application du dispositif de commande à des charges électriques actives, 2, 2A, 2B, 2C du type éclairage, sachant qu'un éclairage peut être, substantiellement, tout appareil électrique qui, lorsqu'il est sous tension, émet un rayonnement lumineux par l'intermédiaire d'un écran ou encore d'un quelconque voyant. De tels appareils peuvent, en outre, être pourvus, en dehors de moyens d'indication visuels de leur fonctionnement, de moyens d'indication sonores. Ainsi, ces appareils peuvent, par exemple, être équipés d'un buseur ou, tout bonnement ils peuvent émettre un bruit de fonctionnement.

Ce dispositif de commande 1, selon l'invention, comporte des moyens de commande 3 sous forme d'un ou plusieurs interrupteurs ayant notamment pour fonction de transmettre à la charge active électrique 2 des ordres de commande de fonctionnement marche et arrêt. Ainsi, ces moyens de commande 3 interviennent sur l'alimentation en énergie électrique 4 d'une telle charge active électrique 2, soit directement par l'intermédiaire du ou des interrupteurs qui les composent, soit par l'intermédiaire d'un commutateur 5 associé aux charges électriques actives 2 qu'ils viennent commander.

Cette configuration est plus particulièrement représentée dans la figure 1 où un tel commutateur 5 se présente, substantiellement, sous forme d'une prise commandée 6 interposée entre le cordon de raccordement électrique 7 de la charge active électrique 2 et l'alimentation en énergie électrique 4.

Là encore, il y a lieu de prendre en considération le fait que la liaison entre le ou les interrupteurs, correspondant à ces moyens de commande 3, et le ou les commutateurs 5 complétant, le cas échéant, ces derniers, peut être filaire et, à cette occasion, la transmission peut se faire par courant porteur. Cette transmission peut encore se faire sans support matériel, notamment, par ondes ultrasons ou infrarouges ou plus particulièrement par ondes radio.

En dehors de ces ordres marche-arrêt, lesdits moyens de commande 3 peuvent encore transmettre d'autres types d'ordre à une ou simultanément à plusieurs charges électriques actives 2.

Ainsi, l'on peut imaginer la possibilité, par l'intermédiaire de ces moyens de commande 3 de transmettre un ordre correspondant à une programmation d'un fonctionnement différé dans le temps et/ou une programmation d'un cycle de fonctionnement particulier. Dans ces conditions, les moyens de commande 3 comportent, bien entendu, des moyens de programmation appropriés, tandis que chaque charge électrique active 2 comporte une unité de traitement 8 en conséquence (voir figure 2). Tout particulièrement, l'on peut retrouver au niveau de cette unité de traitement 8 une mémoire, une horloge et, le cas échéant, des moyens de gestion programmables tels qu'un microprocesseur et autres.

Quoi qu'il en soit, un ordre de cette nature ne se traduit pas, systématiquement, par un mode de fonctionnement arrêt ou marche de la charge et donc il n'est pas directement perceptible par l'utilisateur de sorte qu'il lui faut s'assurer que l'ordre a bien été enregistré et, par conséquent, qu'il sera convenablement exécuté ou, même, qu'il a été exécuté.

A l'heure actuelle, la confirmation de la bonne exécution d'un ordre ou de l'enregistrement convenable d'un ordre, nécessite, dans une configuration telle qu'illustrée dans la figure 1, une liaison retour depuis la charge active électrique 2, 2A, 2B, 2C vers lesdits moyens de commande 3, soit filaire soit par l'intermédiaire de moyens de transmission mettant en oeuvre un émetteur et un récepteur. De la sorte, il est effectivement, possible, d'obtenir, au niveau des moyens de commande 3, une information en retour venant confirmer l'ordre transmis, ceci par l'intermédiaire de moyens de signalisation visuels et/ou sonores associés à ces moyens de commande 3. Toutefois, une telle configuration est non seulement onéreuse, mais aussi complexe à mettre en oeuvre.

La solution selon l'invention consiste en ce que les moyens de signalisation visuels et/ou sonores sont constitués par la charge active électrique 2 commandée ou l'une au moins des charges actives électriques 2, 2A, 2B, 2C, lorsqu'elles sont plusieurs à être commandées simultanément.

Plus précisément, lorsqu'un ordre est transmis par les moyens de commande 3 celui-ci peut être confirmé par un fonctionnement ou un cycle de fonctionnement de ladite charge active électrique 2 de nature à informer l'utilisateur de la bonne exécution ou le bon enregistrement de l'ordre transmis. Il faut, évidemment, que les moyens de signalisation visuels et/ou sonores que constitue ladite charge active électrique soient perceptibles par l'utilisateur depuis les moyens de commande 3 d'où l'ordre est transmis.

Ainsi, pour en revenir à une configuration simplifiée telle qu'illustrée dans la figure 1, illustrant le cas spécifique de charges actives électriques sous forme d'éclairage, les moyens de commande 3 ont la possibilité d'intervenir sur le fonctionnement de plusieurs de ces éclairage 2, 2A, 2B, 2C se situant, par exemple, dans différentes pièces. Il sont tous raccordés à une alimentation en énergie électrique 4 par l'intermédiaire d'une prise commandée 6 reliant, par ailleurs, ces éclairage 2, 2A, 2B, 3C entre eux, par l'intermédiaire d'une interface domotique 9 appropriée. A titre d'exemple, cette interface domotique 9 peut être basée sur le principe des courants porteurs.

De la sorte, lors d'une commande correspondant, par exemple, à l'extinction de l'ensemble des dispositifs d'éclairage depuis les moyens de commande 3, l'information selon laquelle chacun des éclairages 2A, 2B, 2C, est convenablement éteint peut remonter, par l'intermédiaire des interfaces domotiques 9 associées à chacune des prises commandées 6, jusqu'à l'éclairage 2, perceptible visuellement depuis lesdits moyens de commande 3. Ainsi, par un cycle de fonctionnement déterminé, cet éclairage 2 peut, visuellement, informer l'usager de la bonne exécution de l'ordre d'extinction des éclairages 2A, 2B, 2C. A titre d'exemple, l'éclairage 2 ne s'éteindra que si les autres éclairages 2A, 2B, 2C sont éteints.

De la même manière il est tout à fait possible d'ordonner à un groupe d'éclairage, seulement par exemple 2B, 2C que celui-ci s'éteigne, ceci depuis les moyens de commande 3 placés en réalité, à proximité de l'éclairage 2. Ainsi, cet éclairage 2, par un cycle de fonctionnement bref marche-arrêt, par exemple, peut informer que l'ordre transmis est convenablement exécuté, c'est-à-dire que les éclairages 2B, 2C sont éteints. Là encore, cette information remonte à la charge active électrique visible 2 par l'intermédiaire des interfaces domotiques 9 raccordant chacune des prises commandées 6 et donc chacune des charges actives électriques 2, 2A, 2B, 2C.

La configuration représentée en figure 3 diffère en ce que les charges actives électriques 2', 2'A, 2'B, 2'C correspondent à des volets roulants motorisés auxquels sont associés, systématiquement, des moyens de commande 3, 3A, 3B, 3C. Ces volets roulants 2', 2'A, 2'B, 2'C définissent un groupe et sont reliés, les uns aux autres par l'intermédiaire d'une interface domotique 9. Tout comme dans le cas précédent, cette interface domotique 9 peut fonctionner selon le principe des courants porteurs. Il est ainsi possible d'imaginer la commande de fonctionnement d'un groupe de volets roulants 2', 2'A, 2'B, 2'C ou d'un sous-groupe de ces derniers, soit depuis des moyens de commande centrale 3D (représentés en traits discontinus sur la figure 3) ou encore par l'intermédiaire de ces moyens de commande 3, 3A, 3B, 3C associés à chaque volet roulant 2', 2'A, 2'B, 2'C. Ainsi, l'on retrouve au niveau de ces derniers un boîtier électronique 10 renfermant au moins un commutateur 5 permettant de raccorder le volet roulant auquel il est relié à l'alimentation en énergie électrique 4, ceci en fonction d'une commande qui peut être transmise, éventuellement, par n'importe lequel des moyens de commande 3, 3A, 3B, 3C, 3D. A ce ou ces commutateurs 5 peuvent être associées une unité de traitement 8 le cas échéant programmable et, bien sûr, l'interface domotique 9 déjà citée.

En fait, là encore, l'un de ces volets roulants 2', 2'A, 2'B, 2'C, constituant les charges actives électriques peut en soi, constituer des moyens de signalisation visuels et/ou sonores susceptibles d'informer l'usager de la bonne exécution ou non d'un ordre transmis par des moyens de commande 3, 3A, 3B, 3C, 3D. L'on comprend, en effet, qu'il soit nécessaire de s'assurer, avant de quitter une habitation, par exemple, que tous les volets roulants sont convenablement fermés.

Tout particulièrement, lorsqu'on est en présence d'une configuration comportant des moyens de commande centrale 3D permettant, seuls, de commander un groupe de volets roulants 2', 2'A, 2'B, 2'C, le volet roulant et donc la charge active électrique qui va servir de moyen de signalisation visuel et/ou sonore sera celle qui, précisément, est perceptible, visuellement et/ou de manière auditive par l'usager depuis ces moyens de commande centrale 3D.

Dans le cas d'une configuration, conforme à l'invention et qui prévoit, en fait, que les moyens de commande 3, 3A, 3B, 3C associés à chacun des volets roulants 2', 2'A, 2'B, 2'C, peuvent constituer des moyens de commande centrale, le volet roulant servant de moyen de signalisation visuel et/ou sonore permettant d'informer l'usager sur la bonne exécution ou non d'un ordre sera celui auquel sont associés lesdits moyens de commande d'où l'ordre est transmis.

Il est décrit, à présent et de manière plus détaillée, une configuration correspondant à celle qui vient d'être évoquée et qui prévoit l'absence de moyens de commande centrale 3D, par conséquent une configuration selon la figure 3, abstraction faite de la partie représentée en traits discontinus.

Plus précisément, dans une telle configuration, les moyens de commande 3, 3A, 3B, 3C, sont constitués par des interrupteurs monostables 11, 12, tels qu'utilisés, plus fréquemment, pour la commande de montée et de descente d'un volet roulant motorisé. Ces interrupteurs 11, 12 transmettent, préférentiellement, une information du type séquentiel à l'unité de traitement 8 à même d'interpréter les séquences en fonction des données contenues dans une mémoire 13. Ainsi, les séquences sont identifiées par rapport :
- à l'origine de l'impulsion (interrupteur montée 11 ou interrupteur descente 12) ;
- l'ordre des impulsions montée-descente ; descente-montée .. ;
- le nombre des impulsions montée et/ou descente ;
- la durée des impulsions.

A noter, à ce propos, en ce qui concerne la transmission de l'information séquentielle entre les interrupteurs 11, 12 et l'unité de traitement 8, elle peut être envisagée, soit par bus ou par courant porteur, soit par ondes ultrasons, infrarouges ou radio. Bien sûr, on peut encore envisager une combinaison de ces différentes solutions.

Ainsi, après une programmation appropriée, l'on peut commander la descente de plusieurs volets roulants 2', 2'A, 2'B, 2'C, par l'intermédiaire des moyens de commande d'un volet roulant donné. Chaque volet roulant comportant, en soi, des moyens de détection à même d'informer l'unité de traitement 8 qui leur est associée sur la position du tablier du volet roulant 2 et, tout particulièrement, ils sont aptes à transmettre à cette unité de traitement 8 l'information selon laquelle, le volet roulant 2 est ou non fermé. La liaison d'un groupe de volets roulants étant assurée par l'interface domotique 9, l'unité de traitement 8 de chacun de ces volets roulants est en mesure d'être informée par l'intermédiaire de l'unité de traitement 8 des autres volets roulants du groupe si leur tablier respectif est ou non fermé. Ainsi, cette information peut être transmise à l'usager dans les conditions précitées.

Tout particulièrement, lors d'une commande groupée de descente de volet roulant, ledit volet roulant correspondant aux moyens de commande d'où est transmis l'ordre ne se ferme qu'après avoir reçu, de la part de toutes les autres unités de traitement 8 correspondant aux autres volets roulants du groupe ou d'un sous-groupe commandé, l'information selon laquelle tous les volets sont fermés. Par conséquent, si le volet roulant ne se ferme pas l'usager sait, d'emblée, qu'il y a disfonctionnement au niveau du groupe ou du sous-groupe commandé.

Tout comme pour l'application à des éclairages, un tablier d'un volet roulant peut encore informer l'usager de la bonne compréhension de l'ordre saisi. Ainsi, selon un mode de réalisation préférentiel, lors d'une commande groupée, ce tablier du volet roulant constituant les moyens de signalisation visuels et/ou sonores entame sa descente avant de l'interrompre pour ne poursuivre son mouvement qu'une fois recueillie, au niveau de son unité de traitement 8 l'information selon laquelle tous les autres volets du groupe ou du sous-groupe sont fermés. Par son mouvement partiel, ce tablier du volet roulant, correspondant aux moyens de commande d'où est transmis l'ordre, informe l'usager, tout d'abord, que l'ordre a bien été saisi, puisqu'il a bien été exécuté. De plus, ce mouvement en deux temps de ce volet roulant indique, également, à l'usager qu'il y a bien eu commande groupée et non une commande indépendante, celle-ci aurait conduit, par exemple, à une fermeture, sans interruption, dudit volet roulant.

De la même manière, ce tablier de volet roulant peut agir en tant que moyen de signalisation visuel et/ou sonore par l'intermédiaire duquel il est possible de s'assurer qu'un ordre de programmation de l'unité de traitement 8 a bien été saisi et compris. Par exemple, ledit tablier peut exécuter un mouvement du type légère descente, puis de remontée pour montrer à l'usager qu'au travers de la manipulation qu'il vient d'exécuter il est entré en phase de programmation de ladite unité de traitement 8. Ou encore, après programmation consistant à rattacher ledit volet roulant à tel ou tel groupe ou sous-groupe, le tablier peut à nouveau effectuer un mouvement susceptible d'être interprété par l'usager. A noter, à ce propos, que l'on peut même adapter les caractéristiques du mouvement effectué par le volet roulant en fonction de la programmation effectuée.

L'on comprend, au travers de la description qui précède, que la présente invention apporte une solution simple à un problème qui n'a pas pu être résolu, jusqu'alors, à l'aide de moyens techniques contraignants et/ou onéreux. L'on remarquera, au passage, que la présente invention a ceci d'astucieux qu'elle se sert, en tant que moyens de signalisation visuels et/ou sonores de la bonne exécution d'un ordre, de l'organe directement commandé ce qui est contraire aux habitudes dans la mesure où, jusqu'alors, de tels moyens de signalisation visuels et/ou sonores venaient compléter l'appareillage électrique commandé de sorte que l'on allait vers une prolifération de voyants, écrans, buseurs et autres.

## Revendications

1. Dispositif de commande de charges actives électriques (2, 2A, 2B, 2C ; 2', 2'A, 2'B, 2'C), telles que de volets roulants motorisés, d'éclairages ou analogues, lesdites charges (2, 2A, 2B, 2C ; 2', 2'A, 2'B, 2'C) étant raccordées les unes aux autres à l'aide d'une interface domotique (9) appropriée tandis qu'à chacune d'elle est associé un commutateur (5) autorisant leur liaison à une alimentation en énergie électrique (4), à chacune de ces charges (2, 2A, 2B, 2C ; 2', 2'A, 2'B, 2'C) étant associés, en outre, des moyens de commande (3, 3A, 3B, 3C) à même de transmettre à ces charges, par l'intermédiaire du commutateur (5) et en dehors des ordres de fonctionnement marche-arrêt, au moins un ordre supplémentaire tel qu'une programmation de fonctionnement différé ou d'un cycle de fonctionnement déterminé ou encore la commande de fonctionnement d'au moins une autre charge associée (2A, 2B, 2C ; 2'A, 2'B, 2'C), caractérisé par le fait qu'au moins une des charges (2, 2A, 2B, 2C ; 2', 2'A, 2'B, 2'C), aptes à être commandées par des moyens de commande (3, 3A, 3B, 3C) donnés constitue des moyens de signalisation visuels et/ou sonores à même d'informer l'usager sur la bonne exécution ou réception de l'un au moins des ordres à même d'être transmis par ces moyens de commande (3, 3A, 3B, 3C).

2. Dispositif de commande selon la revendication 1, caractérisé par le fait que les moyens de commande (3, 3A, 3B, 3C) sont à même de commander le fonctionnement, simultanément, d'un groupe ou d'un sous-groupe de charges (2, 2A, 2B, 2C ; 2', 2'A, 2'B, 2'C).

3. Dispositif de commande selon les revendications 1 et 2, caractérisé par le fait que le commutateur (5) est relié auxdits moyens de commande (3), soit à l'aide d'une liaison filaire, soit par ondes ultrasons ou infrarouges ou encore par ondes radio.

4. Dispositif de commande selon l'une quelconque des revendications précédentes, caractérisé par le fait que le commutateur (5) se présente, substantiellement, sous forme d'une prise commandée (6) interposée entre le cordon de raccordement électrique (7) de la charge active électrique (2) et l'alimentation en énergie électrique (4), cette prise commandée (6) intégrant l'interface domotique (9) assurant le raccordement des charges entre elles.

5. Dispositif de commande selon l'une quelconque des revendications 1 à 4, caractérisé par le fait que les moyens de commande (3) comportent des moyens de programmation, tandis qu'un commutateur (5) intégré à une prise commandée (6) reliant une charge active électrique (2, 2A, 2B, 2C) à une alimentation en énergie électrique (4), est reliée, en outre, à une unité de traitement (8) munie, le cas échéant, d'une mémoire, d'une horloge et de moyens de gestion programmables.

6. Dispositif de commande selon les revendications 1 et 2, caractérisé par le fait que les moyens de signalisation visuels et/ou sonores, dans un groupe de charges actives électriques commandées (2', 2'A, 2'B, 2'C), sont constitués par la charge électrique active correspondant aux moyens de commande (3, 3A, 3B, 3C) d'où l'ordre est transmis, ceci lors d'une commande groupée ou encore d'une programmation quelconque.

7. Dispositif de commande selon les revendications 1 et 2, caractérisé par le fait que l'interface domotique (9) reliant entre elles les charges actives électriques (2, 2A, 2B, 2C ; 2', 2'A, 2'B, 2'C) définissant un groupe, fonctionne selon le principe des courants porteurs.

8. Application du dispositif de commande selon l'une quelconque des revendications précédentes aux volets roulants.

## Patentansprüche

1. Steuergerät für aktive elektrische Lasten (2, 2A, 2B, 2C ; 2', 2'A, 2'B, 2'C), wie motorbetriebene Rolläden, Beleuchtungen oder dergleichen, wobei die genannten Lasten (2, 2A, 2B, 2C ; 2', 2'A, 2'B, 2'C) mittels einer geeignete Haushaltstechnik-Schnittstelle (9) mit einander verbunden sind, während jeder derselben ein Umschalter (5) zugeordnet ist, der den Anschluß derselben an eine elektrische Stromversorgung (4) erlaubt, wobei diesen Lasten (2, 2A, 2B, 2C ; 2', 2'A, 2'B, 2'C) außerdem jeweils Steuermittel (3, 3A, 3B, 3C) zugeordnet sind, geeignet, diesen Lasten über den Umschalter (5) und neben den Befehlen für den Ein-Aus-Betrieb wenigstens einen zusätzlichen Befehl, wie eine Programmierung eines zeiteingestellten Betriebs oder eines bestimmten Betriebszyklus oder auch die Steuerung des Betriebs wenigstens einer weiteren zugeordneten Last (2A, 2B, 2C ; 2'A, 2'B, 2'C), zu senden, dadurch gekennzeichnet, daß wenigstens eine der Lasten (2, 2A, 2B, 2C ; 2', 2'A, 2'B, 2'C), geeignet, von bestimmten Steuermitteln (3, 3A, 3B, 3C) gesteuert zu werden, visuelle und/oder hörbare Signalisierungsmittel bilden, die geeignet sind, den Gebraucher über die richtige Erledigung oder den Empfang wenigstens eines der Befehle, die von diesen Steuermitteln (3, 3A, 3B, 3C) gesandt werden können, zu berichten.

2. Steuergerät nach Anspruch 1, dadurch gekennzeichnet, daß die Steuermittel (3, 3A, 3B, 3C) geeignet sind, gleichzeitig den Betrieb einer Gruppe oder einer Untergruppe von Lasten (2, 2A, 2B, 2C ; 2', 2'A, 2'B, 2'C) zu steuern.

3. Steuergerät nach Anspruch 1 und 2, dadurch gekennzeichnet, daß der Umschalter (5) entweder mittels einer Drahtverbindung oder mittels Ultraschall- oder infraroter Wellen oder auch mittels Radiofrequenzwellen mit den genannten Steuermitteln (3) verbunden ist.

4. Steuergerät nach irgendeinem der vorgehenden Ansprüche, dadurch gekennzeichnet, daß der Umschalter (5) im wesentlichen als eine zwischen der elektrischen Anschlußschnur (7) der aktiven elektrischen Last (2) und der elektrischen Stromversorgung (4) eingeschaltete, gesteuerte Steckdose (6) ausgestaltet ist, wobei diese gesteuerte Steckdose (6) die Haushaltstechnik-Schnittstelle (9) integriert, die die Verbindung der Lasten mit einander sichert.

5. Steuergerät nach irgendeinem der Ansprüche 1 bis 4, dadurch gekennzeichnet, daß die Steuermittel (3) Programmiermittel umfassen, während ein in einer gesteuerten Steckdose (6), die eine aktive elektrische Last (2, 2A, 2B, 2C) mit einer elektrischen Stromversorgung (4) verbindet, integrierter Umschalter (5) außerdem mit einer Verarbeitungseinheit (8) verbunden ist, die gegebenenfalls mit einem Speicher, einer Uhr und programmierbaren Steuermitteln versehen ist.

6. Steuergerät nach Anspruch 1 und 2, dadurch gekennzeichnet, daß die visuellen und/oder hörbaren Signalisierungsmittel in einer Gruppe von aktiven elektrischen Lasten (2', 2'A, 2'B, 2'C) durch die den Steuermitteln (3, 3A, 3B, 3C) entsprechende, aktive elektrische Last gebildet sind, ab der der Befehl gesandt wird, und zwar während einer gruppierten Steuerung oder auch irgendeiner Programmierung.

7. Steuergerät nach Anspruch 1 und 2, dadurch gekennzeichnet, daß die Haushaltstechnik-Schnittstelle (9), die die eine Gruppe definierenden Lasten (2, 2A, 2B, 2C ; 2', 2'A, 2'B, 2'C) mit einander verbindet, nach dem Prinzip der Trägerströme arbeitet.

8. Anwendung des Steuergeräts nach irgendeinem der vorgehenden Ansprüche für Rolläden.

## Claims

1. Controller for active electrical loads (2, 2A, 2B, 2C ; 2', 2'A, 2'B, 2'C), such as motorised roller blinds, lightings or the like, said loads (2, 2A, 2B, 2C ; 2', 2'A, 2'B, 2'C) being connected to each other by means of an appropriate home automation interface (9), whilst to each of them is associated a switch (5) authorising their connection to an electric power supply (4), to each of these loads (2, 2A, 2B, 2C ; 2', 2'A, 2'B, 2'C) being associated, in addition, control means (3, 3A, 3B, 3C) capable of transmitting to these loads, through the switch (5) and besides the IN-OUT operating orders, at least an additional order, such as a programming for temporised operation or a defined operating cycle or even the control of the operation of at least another associated load (2A, 2B, 2C ; 2'A, 2'B, 2'C), characterised in that at least one of the loads (2, 2A, 2B, 2C ; 2', 2'A, 2'B, 2'C) capable of being controlled by given control means (3, 3A, 3B, 3C) forms visual and/or sound signalling means capable of informing the user of the correct carrying out or reception of at least one of the orders that can be transmitted by these control means (3, 3A, 3B, 3C).

2. Controller according to claim 1, characterised in that the control means (3, 3A, 3B, 3C) are capable of simultaneously controlling the operation of a group or subgroup of loads (2, 2A, 2B, 2C ; 2', 2'A, 2'B, 2'C).

3. Controller according to claims 1 and 2, characterised in that the switch (5) is connected to said control means (3) either by means of a wire connection or through ultrasonic or infrared or even radio frequency waves.

4. Controller according to any of the preceding claims, characterised in that the switch (5) is substantially in the form of a controlled socket connector (6) interposed between the electric connecting cord (7) of the active electric load (2) and the electric power supply (4), this controlled socket connector (6) integrating the home automation interface (9) ensuring the connection of the loads to each other.

5. Controller according to any of claims 1 to 4, characterised in that the control means (3) include programming means, whilst a switch (5) integrated into a controlled socket connector (6) connecting an active electric load (2, 2A, 2B, 2C) to an electric power supply (4) is connected, in addition, to a processing unit (8) provided, as the case may be, with a memory, a clock and programmable control means.

6. Controller according to claims 1 and 2, characterised in that the visual and/or sound signalling means in a group of active electric loads (2', 2'A, 2'B, 2'C) are formed by the active electric load corresponding to the control means (3, 3A, 3B, 3C) from which the order is transmitted, this during a grouped control or also during any programming.

7. Controller according to claims 1 and 2, characterised in that the home automation interface (9) connecting to each other the active electric loads (2, 2A, 2B, 2C ; 2', 2'A, 2'B, 2'C) defining a group operates according to the principle of the carrier currents.

8. Application of the controller according to any of the preceding claims to roller blinds.
